# EUROPEAN PATENT APPLICATION

(11) **EP 1 675 124 A1**
(43) Date of publication of application: **28.06.2006**
(21) Application number: 04772969.4
(22) Date of filing: 07.09.2004
(51) Int. Cl.: G11B 27/00, G11B 27/10, H04N 5/76, G06F 12/00

(54) **FILE MANAGEMENT DEVICE, FILE MANAGEMENT METHOD, PROGRAM OF FILE MANAGEMENT METHOD, AND RECORDING MEDIUM CONTAINING THE PROGRAM OF FILE MANAGEMENT METHOD**

(30) Priority: 03.10.2003 JP 2003345814
(71) Applicant: SONY CORPORATION, Tokyo 141-0001 (JP)
(72) Inventor: JINNO, Hiroshi, Shinagawa-ku, Tokyo 141-0001 (JP); KASHIWAGI, Shigeru, Shinagawa-ku, Tokyo 141-0001 (JP); YOSHIDA, Haruo, Shinagawa-ku, Tokyo 141-0001 (JP); MURAKAMI, Masaharu, Shinagawa-ku, Tokyo 141-0001 (JP); OHNO, Masayoshi, Shinagawa-ku, Tokyo 1410001 (JP); YAMADA, Makoto, Shinagawa-ku, Tokyo 1410001 (JP)
(74) Representative: Robinson, Nigel Alexander Julian
(86) International application number: PCT/JP2004/013287
(87) International publication number: WO 2005/034126

(57) **Abstract**

The present invention is applied, for example, to a video disk apparatus such that a new folder is produced on a recording medium in response to an operation of a folder switch which accepts an instruction to produce a folder and a result of image pickup is recorded under the produced folder.

## Description

### Technical Field

This invention relates to a file management apparatus, a file management method, a program of the file management method and a recording medium on which the program of the file management method is recorded and can be applied, for example, to a video disk apparatus. The present invention allows simple and easy production of a folder with an intention of a user reflected on the production of a folder to perform file management by producing, in response to an operation of a folder switch, which accepts an instruction to produce a folder, a new folder on a recoding medium and recording a result of image pickup under the produced folder.

### Background Art

In recent years, disk apparatus and the like which use a recording medium of a large capacity which allows random accessing such as an optical disk to record results of image pickup have been proposed.

As a file management method for such a recording apparatus as just described, a method is proposed, for example, in Japanese Patent Laid-open No. 2000-207872 wherein a folder is produced automatically by period management of the date and so forth and a file of results of image pickup or the like is stored into the folder. In such file management which depends upon automatic production of a folder as just described, also a method is proposed wherein a folder is produced automatically in response to an operation of a power supply switch and further through management of the data amount in place of the date and results of image pickup or the like are stored into the folder.

In contrast, for example, Japanese Patent Laid-open No. 2001-84705 proposes a method wherein an index file is produced from a large number of files recorded on a recording medium and is recorded on the recording medium to enhance the operability relating to the large number of files using the index file.

Meanwhile, Japanese Patent Laid-open No. 2002-278996 proposes a method wherein files are hierarchized for management in an index file produced in such a manner as described above to further enhance the operability relating to the large number of files.

Incidentally, in file management methods wherein a folder is produced automatically, it is difficult for an intention of a user to be reflected with certainty on production of a folder. Therefore, the file management methods have a problem that they are insufficient in practical use.

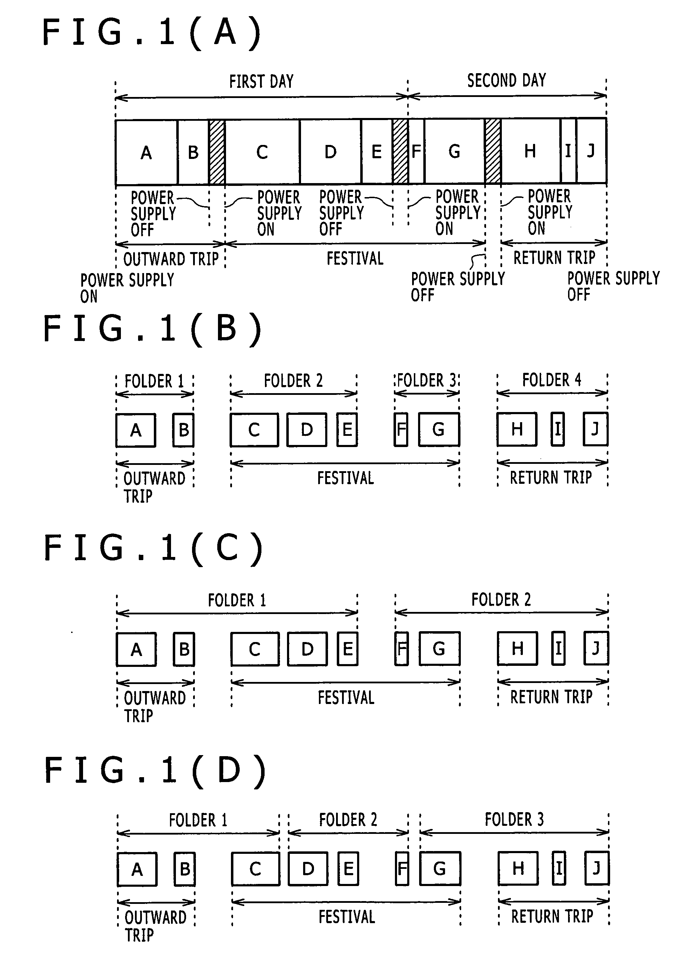

In particular, it is assumed that, for example, as illustrated in FIG. 1(A), a recording apparatus of the type described is carried and scenes A and B on an outward trip and scenes C to E of a festival are recorded on a recording medium first, and then, on the next day, scenes F and G of the festival and scenes H to J on a return trip are recorded on the same recording medium. In this instance, it is considered that, after the scenes A and B on the outward drip are picked up, the power supply is turned and held off for a period of time until the scenes C to E of the festival are picked up. Further, it is considered that, also within a period of time between the first day and the second day, the power supply is held off, and also within another period of time after the scenes F and G of the festival are picked up until the scenes H to J on the return trip are picked up, the power supply is held off.

Consequently, in this instance, where a folder is automatically produced in response to turning on of the power supply, the scenes C to G of the festival picked up across the two days are recorded separately in two folders as seen in FIG. 1(B). On the other hand, where a folder is automatically produced in response to the date, the scenes C to G of the festival picked up across the two days are recorded separately in two folders such that they are recorded individually together with the scenes A and B on the outward trip and the scenes on the return trip as seen in FIG. 1(C). Where a folder is automatically produced through management of the data amount, folders may be produced in a chopped fashion or scenes picked up at different locations may be collected in one folder as 1(D).

### Disclosure of Invention

The present invention has been made in view of such points as described above and proposes a file management apparatus, a file management method, a program of the file management method and a recording medium on which the program of the file management method is recorded, wherein a folder can be produced simply and easily with an intention of a user reflected on the production of a folder to perform file management.

In order to solve the subject just described, the present invention is applied to a file management apparatus which records a result of image pickup in a file, including an image pickup section for acquiring the result of image pickup, a recording section for recording the result of image pickup on a recording medium, and a control section for controlling operation of the image pickup section and the recording section, wherein the control section produces, in response to an operation of a folder switch which accepts an instruction to produce a folder, a new folder on the recording medium and records the result of image pickup obtained from the image pickup section under the produced folder.

According to the configuration of the present invention, since the file management apparatus which records a result of image pickup in a file, including an image pickup section for acquiring the result of image pickup, a recording section for recording the result of image pickup on a recording medium, and a control section for controlling operation of the image pickup section and the recording section, the control section being operable to produce, in response to an operation of a folder switch which accepts an instruction to produce a folder, a new folder on the recording medium and to record the result of image pickup obtained from the image pickup section under the produced folder, the user can produce a folder newly and record a result of image pickup into the folder only by merely operating the folder switch. Consequently, a folder can be produced simply and easily with an intention of the user reflected on the production of the folder.

Further, the present invention is applied to a file management method for recording a result of image pickup in a file on a recording medium, wherein a new folder is produced on the recording medium in response to an operation of a folder switch which accepts an instruction to produce a folder, and the result of image pickup is recorded under the produced folder.

Consequently, with the configuration of the present invention, a file management method by which a folder can be produced simply and easily with an intention of the user reflected on the production of the folder can be provided.

Further, the present invention is applied to a program of a file management method for causing a computer to execute a predetermined processing procedure to record a result of image pickup in a file on a recording medium, the processing procedure including the steps of producing a new folder on the recording medium in response to an operation of a folder switch which accepts an instruction to produce a folder, and recording the result of image pickup under the produced folder.

Consequently, with the configuration of the present invention, a program of a file management method by which a folder can be produced simply and easily with an intention of the user reflected on the production of the folder can be provided.

Furthermore, the present invention is applied to a recording medium on which a program of a file management method for causing a computer to execute a predetermined processing procedure to record a result of image pickup in a file on a recording medium is recorded, the processing procedure including the steps of producing a new folder on the recording medium in response to an operation of a folder switch which accepts an instruction to produce a folder; and recording the result of image pickup under the produced folder.

Consequently, with the configuration of the present invention, a recording medium on which a program of a file management method by which a folder can be produced simply and easily with an intention of the user reflected on the production of the folder is recorded can be provided.

According to the present invention, a folder can be produced simply and easily with an intention of the user reflected on the production of the folder.

### Brief Description of Drawings

FIGS. 1(A) to 1 (D) are diagrams illustrating management of results of image pickup with a folder;
FIG. 2 is a block diagram showing a video disk apparatus according to an embodiment 1 of the present invention;
FIG. 3 is a diagram showing a software configuration of the video disk apparatus of FIG. 2;
FIG. 4 is a flow chart illustrating a processing procedure of an MPU of the video disk apparatus of FIG. 2 when the power supply is turned on;
FIG. 5 is a diagram illustrating a directory structure in the video disk apparatus of FIG. 2;
FIG. 6 is a flow chart illustrating a processing procedure of the MPU of the video disk apparatus of FIG. 2;
FIG. 7 is a diagram showing a directory structure of a video disk apparatus according to an embodiment 2 of the present invention;
FIGS. 8(A) to 8(C) are diagrams illustrating an index file according to an embodiment 3 of the present invention; and
FIGS. 9(A) and 9(B) are diagrams illustrating file management of the index file according to the embodiment 3.

### Best Mode for Carrying out the Invention

In the following, embodiments of the present invention are described suitably with reference to the drawings.

### (1) Configuration of Embodiment

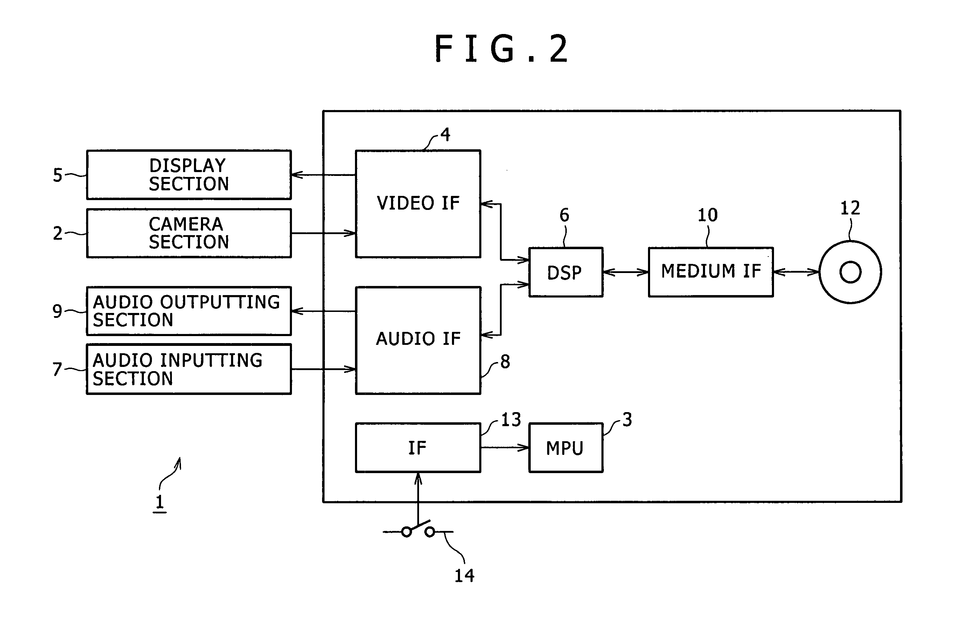

FIG. 2 is a block diagram showing a video disk apparatus according to an embodiment 1 of the present invention. In the present video disk apparatus 1, a camera section 2 outputs video data according to a result of image pickup obtained by picking up an image of a desired subject under the control of an MPU (Micro Processing Unit) 3 to a video interface (video IF) 4. In this process, the camera section 2 acquires and outputs results of image pickup while changing over between still pictures and moving pictures in accordance with an instruction of the MPU 3. A display section 5 is formed from a liquid crystal display unit or the like and displays an image based on a video signal outputted from the video interface 4. Upon recording of results of image pickup, the video interface 4 successively receives video data outputted from the camera section 2 to input thereto and outputs the video data to a DSP (Digital Signal Processor) 6. However, upon reproduction of results of image pickup, the video interface 4 outputs video data outputted from the DSP 6 to the display section 5.

A sound inputting section 7 acquires, upon recording of results of image pickup, a sound signal from an image pickup subject and outputs sound data based on the sound signal to an audio interface (audio IF) 8. Upon reproduction of a result of image pickup, a sound outputting section 9 converts sound data outputted from the audio interface 8 into an analog signal and provides the analog signal to a user. Upon recording of results of image pickup, the audio interface 8 outputs sound data inputted from the sound inputting section 7 to the DSP 6, but upon reproduction of a result of image pickup, the audio interface 8 outputs sound data outputted from the DSP 6 to the sound outputting section 9.

The DSP 6 changes over operation thereof under the control of the MPU 3 such that, upon recording of a result of image pickup, it compresses video data and audio data inputted thereto from the video interface 4 and the audio interface 8, respectively, to produce coded data and performs a multiplexing process for the coded data to produce streaming data composed of the video data and the sound data. The DSP 6 outputs the streaming data to a medium interface (medium IF) 10. On the other hand, upon reproduction, the DSP 6 demultiplexes streaming data outputted from the medium interface 10 into coded data of video data and coded data of audio data, and decodes and outputs the video data and the audio data to the video interface 4 and the audio interface 8, respectively.

The medium interface 10 records, upon recording of a result of image pickup, streaming data outputted from the DSP 6 on an optical disk 12 as a recording medium under the control of the MPU 3, but upon reproduction, reproduces streaming data recorded on the optical disk 12 and outputs the reproduced streaming data to the DSP 6. Consequently, in the present video disk apparatus 1, results of image pickup in the form of moving pictures or still pictures are recorded on the optical disk 12, and the results of image pickup recorded on the optical disk 12 are reproduced and provided to a user.

An interface (IF) 13 notifies the MPU 3 of an operation conducted by an inputting means provided on the video disk apparatus 1. In the video disk apparatus 1, a folder switch 14 is provided on an operation panel, and a depression operation of the folder switch 14 is conveyed to the MPU 3 through the interface 13. Here, the folder switch 14 is an operation element which accepts an instruction for production of a folder, and in the present video disk apparatus 1, the operation mode is changed over to a folder setting mode by an operation of the folder switch 14 so that a folder is automatically produced on the optical disk 12 and files based on results of image pickup are successively recorded in the produced folder. Further, in such a folder setting mode as just described, a user is notified through lighting of a light emitting diode provided on the operation panel. If the folder switch 14 is operated in a state wherein the folder setting mode is set in this manner, then the operation mode is changed over to an ordinary operation mode, in which results of image pickup are recorded in a folder set in advance. It is to be noted that, in the present video disk apparatus 1, when the power supply is turned on, operation is started in the folder setting mode, and also in this instance, the operation mode is changed over to the ordinary operation mode in response to an operation of the folder switch 14.

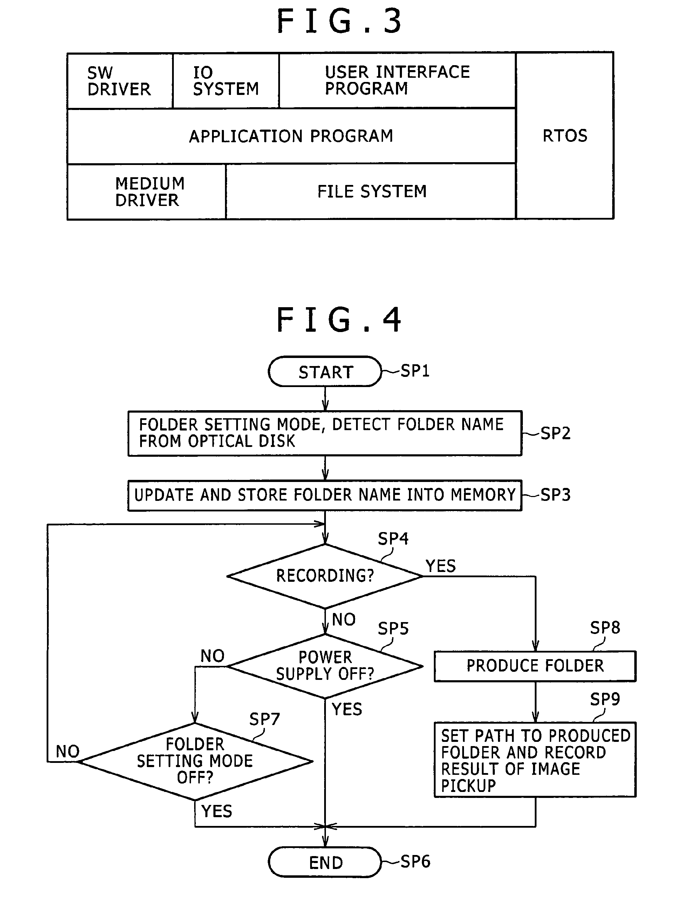

The MPU 3 is a computer which controls operation of the entire video disk apparatus 1 through execution of a processing program having a software configuration shown in FIG. 3. Here, in the present configuration of the software, the MPU 3 accesses the optical disk through a medium driver by region management of a file system under the control of an application program and records a result of image pickup on the optical disk 12 or reproduces a result of image pickup recorded on the optical disk 12. Further, the MPU 3 drives a user interface program under the control of the application program to display a menu screen or the like and detects an operation by a user through an IO system by means of the application program. Further, the MPU 3 arbitrates various processes in accordance with an RTOS (Real Time Operating System) while securing functions as a virtual storage apparatus by an SW driver. It is to be noted that, although a processing program relating to the MPU 3 is provided through advance installation, it may otherwise be installed by downloading through a network or may be reproduced from a recording medium and installed. Incidentally, various recording media such as optical disks, magnetic tapes and memory cards can be applied widely as such a recording medium as just mentioned.

The MPU 3 controls operation of the components in response to an operation of a user by execution of the processing program thereby to acquire and record a result of image pickup on the optical disk 12 or reproduce a result of image pickup recorded on the optical disk 12 and provide the reproduced result to the user. In the processes mentioned, the MPU 3 executes a processing procedure illustrated in FIG. 4 in response to turning on of the power supply. Consequently, a result of image pickup is recorded into a new folder using the turning on of the power supply as a trigger.

In particular, when the power supply is turned on by the user, the MPU 3 advances the processing from step SP1 to step SP2, at which it sets the operation mode of the entire video disk apparatus 1 to the folder setting mode and turns on the light emitting diode provided on the operation panel and indicative of the folder setting mode. Further, the MPU 3 analyzes a directory structure recorded on the optical disk 12 using the file system of the optical disk 12 to detect a folder name which has been produced latest on the optical disk 12 and in which a result of image pickup is recorded.

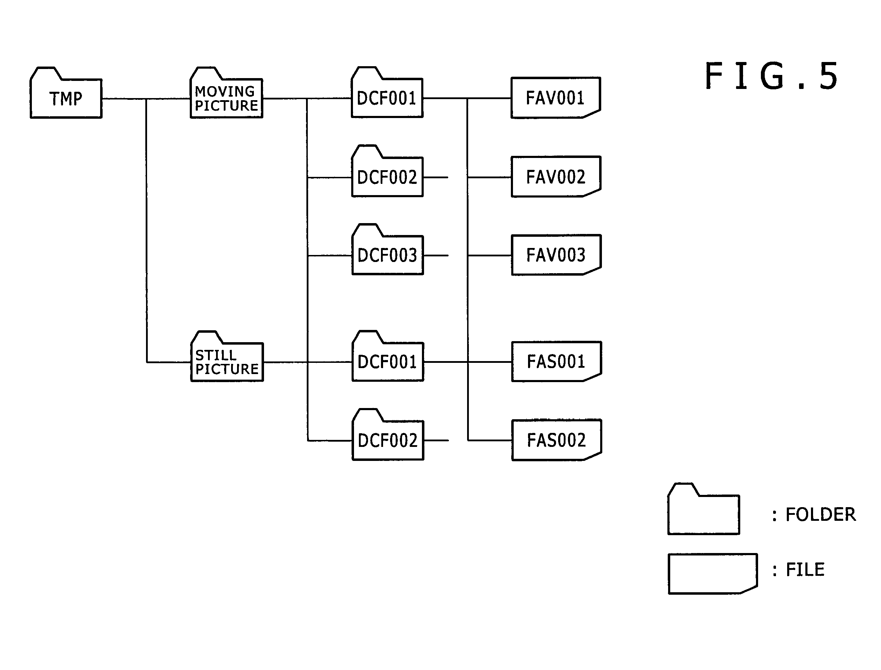

Here, on the optical disk 12 in the present embodiment, as shown in FIG. 5, a folder (TMP) in which results of image pickup are to be recorded is formed and, below the folder, another folder (moving picture) in which results of image pickup in the form of a moving picture are placed collectively and a further folder (still picture) in which results of image pickup in the form of a still picture are placed collectively are produced. Further, files of moving pictures and still pictures are recorded in folders below the folders of moving pictures and still pictures on the optical disk 12, respectively. Consequently, the moving picture files and the still picture files are managed separately on the optical disk 12.

Further, on the optical disk 12, the folders formed below the folders of moving pictures and still pictures in this manner individually have a folder name including a code DCF representing that results of image pickup are recorded in the folder and a numeral of three digits whose value increases successively in accordance with the order in production. Further, each file has a file name including a code FAV or FAS representing that the file is a moving picture file or a still picture file and a numeral of three digits whose value successively increases in accordance with the order in production.

Consequently, the MPU 3 detects the folder names produced for the folders of moving pictures and still pictures of the optical disk 12 and detects the latest folder name from the numerals of three digits set to the detected folder names.

Then, the MPU 3 advances the processing to step SP3, at which it increments the numeral of three digits relating to the folder name detected here and records the resulting numeral of three digits into a memory together with the code of the folder name thereby to update the detected folder name and temporarily store the updated folder name into the memory.

After the folder name is updated in this manner, the MPU 3 advances the processing to step SP4, at which it decides whether or not an instruction to record a result of image pickup is issued by an operation of the operation element by the user. If a negative result is obtained at step SP4, then the processing advances to step SP5. At step SP5, the MPU 3 decides whether or not an operation to turn off the power supply is performed. If an affirmative result is obtained at step SP5, then the processing advances to step SP6, at which the MPU 3 ends the processing procedure. On the other hand, if a negative result is obtained at step SP5, then the processing advances from step SP5 to step SP7, at which the MPU 3 decides whether or not the folder setting mode is canceled by an operation of the folder switch 14 by the user. If an affirmative result is obtained at step SP7, then the MPU 3 advances the processing from step SP7 to step SP6, at which it ends the processing procedure. However, if a negative result is obtained at step SP7, then the processing returns from step SP7 to step SP4. Consequently, unless the power supply is turned off, and besides unless the folder setting mode is canceled by an operation of the folder switch 14, the processing procedure of steps SP4 - SP5 - SP7 - SP4 is repeated, and if an instruction to record a result of image pickup is issued, then the processing advances from step SP4 to step SP8.

At step SP8, the MPU 3 produces a folder of the folder name recorded in the memory through the file system on the optical disk 12. Then at step SP9, the MPU 3 sets a path to the folder of the folder name and issues an instruction to record a result of image pickup. At this time, where the result of image pickup to be recorded is moving pictures (FIG. 5), a folder of the folder name is produced below the folder of moving pictures and the result of image pickup is recorded into the folder. However, where the result of image pickup to be recorded is still pictures, a folder of the folder name is produced below the folder of still pictures and still pictures are recorded into the folder. Further, at this time, the value of the numeral of three digits for the file name described hereinabove is initialized to the value 000 to set the file name.

Consequently, the MPU 3 produces a folder by turning on of the power supply as a trigger and records a result of image pickup into the folder. Then, when recording of the result of image pickup is completed, the processing advances to step SP6 to end the processing procedure.

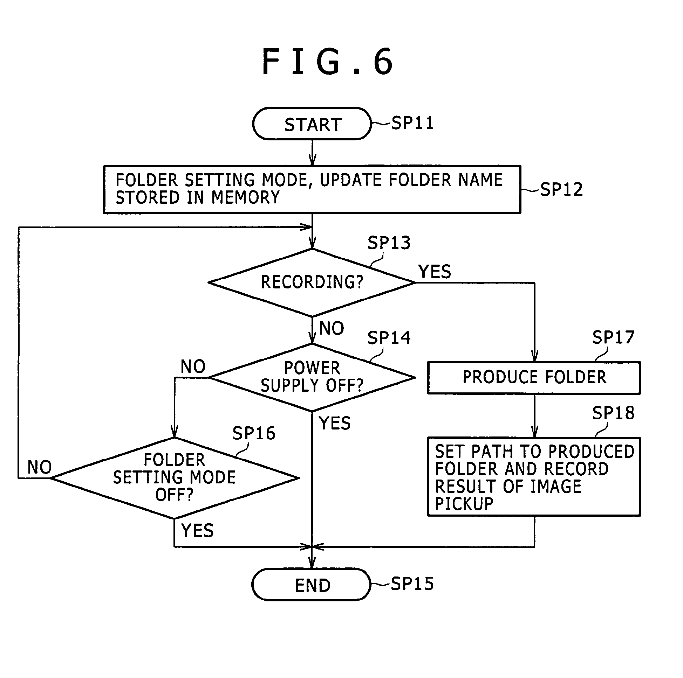

On the other hand, if the folder switch 14 is operated by the user in the ordinary operation mode, then a folder is produced similarly, and the result of image pickup is recorded into the produced folder. FIG. 6 is a flow chart illustrating a procedure of a series of processes for the production of a folder. When the folder switch 14 is operated, the MPU 3 advances the processing from step SP11 to step SP12, at which it sets the operation mode to the folder setting mode and updates the folder name stored into the memory upon turning on of the power supply in a similar manner as at step SP2 of FIG. 4.

After the folder name is updated in this manner, the MPU 3 advances the processing to step SP13, at which it decides whether or not an instruction to record a result of image pickup is issued by an operation of the operation element by the user. If a negative result is obtained at step SP13, then the processing advances to step SP14. Here, the MPU 3 decides whether or not an operation to turn off the power supply is performed. If an affirmative result is obtained at step SP14, then the processing advances to step SP15, at which the processing procedure is ended. However, if a negative result is obtained at step SP14, then the processing advances from step SP14 to step SP16, at which the MPU 3 decides whether or not the folder setting mode is canceled by an operation of the folder switch 14 by the user. If an affirmative result is obtained at step S16, then the MPU 3 advances the processing from step SP16 to step SP15, at which it ends the processing procedure. However, if a negative result is obtained at step SP16, then the processing returns from step SP16 to step SP13. Consequently, the MPU 3 waits for an instruction to record a result of image pickup. Then, if an instruction to record a result of image pickup is issued, then the processing advances from step SP13 to step SP17, at which the MPU 3 produces a folder of the folder name recorded in the memory through the file system on the optical disk 12. Then at step SP18, the MPU 3 sets a path to the folder of the folder name and issues an instruction to record a result of image pickup. Also in this instance, where the result of image pickup to be recorded is moving pictures (FIG. 5), the MPU 3 produces a folder of the folder name below the folder of moving pictures and records the result of image pickup into the folder. However, where the result of image pickup to be recorded is still pictures, the MPU 3 produces a folder of the folder name below the folder of still pictures and records still pictures into the folder. Further, the value of the numeral of three digits for the file name described hereinabove is initialized to the value 000 to set the file name.

Consequently, the MPU 3 produces a folder using an operation of the folder switch as a trigger and records a result of image pickup into the folder. Then, when recording of the result of image pickup is completed, the processing advances to step SP15 to end the processing procedure. Consequently, a folder is produced with an intention of the user reflected thereon.

After the MPU 3 produces a new folder in one of the folder of moving pictures and the folder of still pictures by execution of the processing procedure illustrated in FIG. 4 or 6, it sets a path to the folder and records a file into the folder upon later recording of a result of image pickup in the form of moving pictures or still pictures. On the other hand, in the ordinary operation mode, a file based on a corresponding result of image pickup is recorded immediately below the folder of moving pictures or the folder of still pictures.

In the processes described above, when a result of image pickup in the form of still pictures is recorded in a state wherein the operation mode still remains set to the folder setting mode after a folder is produced in the folder of moving pictures and a result of image pickup is recorded into the produced folder, a folder corresponding to the folder produced as the folder of moving pictures is produced in a folder for still pictures to be recorded and a result of image pickup in the form of still pictures is recorded into the produced folder. Further, at this time, also the file name for still pictures is initialized and results of image pickup in the form of still pictures are recorded under successive file names.

Conversely when a result of image pickup in the form of moving pictures is recorded in a state wherein the operation mode still remains set to the folder setting mode after a folder is produced in the folder of still pictures and a result of image pickup is recorded into the produced folder, a folder corresponding to the folder produced in the folder of still pictures is produced in a folder for moving pictures to be recorded and a result of image pickup in the form of moving pictures is recorded into the produced folder. Further, at this time, also the file name for still pictures is initialized and results of image pickup in the form of moving pictures are recorded under successive file names.

In contrast, if an instruction to reproduce a result of image pickup recorded on the optical disk 12 is issued by the user through the interface 13, then the MPU 3 issues an instruction to reproduce a file recorded on the optical disk 12 to the medium interface 10 and, as a result, issues an instruction to the DSP 6 and so forth to process streaming data outputted from the medium interface 10. Consequently, in the video disk apparatus 1, a result of image pickup recorded on the optical disk 12 can be confirmed through the sound outputting section 9.

In this series of processes for reproduction, if an instruction to display a list of files recorded on the optical disk 12 is issued by the user, then the MPU 3 displays the files recorded on the optical disk 12 in a tree structure shown in FIG. 5 or in a list wherein display areas are separated for the individual folders in accordance with a setting by the user. Consequently, in the present embodiment, selection of a file by the user is accepted by file management depending upon folders produced with an intention of the user reflected thereon.

On the other hand, if the user issues an instruction to reproduce a result of image pickup without indicating a file, then the MPU 3 successively reproduces the files from the folder produced latest based on the folder name and provides the reproduced files to the user. Further, if an operation element for skipping is operated by the user in a state wherein a file is being produced in this manner, then the reproduction of the file being currently reproduced is stopped and the object of reproduction is changed over to a next file.

Consequently, in the video disk apparatus 1, a selection operation of files by the user is simplified by file management based on folders produced reflecting an intention of the user thereon by reproducing the files recorded on the optical disk 12 in a reverse order on the time base.

### (2) Operation of the Embodiment

In the video disk apparatus 1 (FIG. 2) having the configuration described above, a result of image pickup in the form of moving pictures or still pictures acquired by the camera section 2 is processed by the DSP 6 together with sound data acquired by the sound inputting section 7 and is recorded on the optical disk 12 through the medium interface 10. Consequently, the result of image pickup is recorded in a file format on the optical disk 12. Further, the result of image pickup recorded in this manner is reproduced by the optical disk 12 and inputted from the medium interface 10 to the DSP 6. Then, the result of image pickup is decoded by the DSP 6 and outputted from the display section 5 and the sound outputting section 9. Consequently, the video disk apparatus 1 can reproduce the result of image pickup recorded on the optical disk 12 so that it may be confirmed.

In the processes described, in the video disk apparatus 1 (FIG. 5), results of image pickup in the form of moving pictures are recorded under the folder of moving pictures in which files of moving pictures are collected while results of image pickup in the form of still pictures are recorded under the folder of still pictures in which files of still pictures are collected. Consequently, moving pictures and still pictures are managed separately to enhance the convenience to the user. Further, the files of moving pictures and the files of still pictures are individually recorded with file names based on serial numbers, and the files can be managed with reference to the file names.

In the file management on the optical disk 12 by the video disk apparatus 1, if the folder switch 14 is operated by the user and then an instruction to record a result of image pickup is issued (FIG. 6), then a folder is formed newly below the folder of moving pictures or the folder of still pictures corresponding to moving pictures or still pictures of the result of image pickup in accordance with the instruction. Then, the result of image pickup is recorded in the folder, and also in recording of a later result of image pickup, the result of image pickup is recorded under the folder produced newly. Further, if the user changes over the recording of a result of image pickup from that of moving pictures to that of still pictures, or if the user changes over the recording of a result image pickup from that of still pictures to moving pictures conversely, then as a folder of still pictures or a folder of moving pictures which is a destination of the changeover, a new folder is produced with a folder name corresponding to the folder of moving pictures or the folder of still pictures, and the result of image pickup is recorded under the new folder.

Consequently, when the user changes over, for example, an image pickup subject or changes over the place of image pickup or the like, it is possible to change over the folder and record a result of image pickup by a simple and easy operation only of operating the operation element of the folder switch 14 suitably, and the convenience in use can be enhanced as much. However, such production of a folder using a folder switch as a trigger is production of a folder in accordance with an intention of the user. Therefore, in the present embodiment, an intention of the user is reflected on production of a folder, and it is possible to produce a folder simply and easily and manage files.

Meanwhile, such an image pickup apparatus as described above is occasionally left in a home for a long period of time with the power supply kept turned off. Further, during a journey of the user or in a like case, the power supply is kept turned off for a period of time after image pickup for the day is ended until image pickup is started next day. In such cases, turning on the power supply can be deemed a delimiter in image pickup. Consequently, in the video disk apparatus 1, also when the power supply is turned on in this manner, a folder is produced to record a result of image pickup in a similar manner as in the case wherein the folder switch 14 is operated.

Consequently, in the video disk apparatus 1, even if the user forgets to operate the folder switch, file management by the user can be simplified by producing a folder using at least application of power as a trigger.

Further, since such a folder as described above is produced below the folder of moving pictures or the folder of still pictures in which moving pictures or still pictures are collected in this manner and a result of image pickup in the form of moving pictures or still pictures is recorded in the produced folder such that the folder in which the result of image pickup is to be recorded is changed over between a moving picture file and a still picture file to record the result of image pickup. Consequently, file management by the user can be further simplified.

In this way, if an instruction to display files is issued from the user, then in the video disk apparatus 1, files are displayed with reference to a folder set in such a manner as described above. Consequently, the user can select a desired file, for example, with reference to a place of image pickup, an image pickup subject or the like, and the convenience in use to the user can be enhanced.

On the other hand, if the user issues an instruction to reproduce files recorded on the optical disk 12 without selecting any file, then in the video disk apparatus 1, the files are successively reproduced and provided to the user beginning with files recorded in the latest folder with reference to the folder produced in this manner. Consequently, in the video disk apparatus 1, a desired result of image pickup can be detected simply, easily and rapidly by skipping files as occasion demands. Also by this, the convenience in use to the user can be enhanced.

### (3) Effects of the Embodiment

According to the configuration described above, in response to an operation of the folder switch which accepts an instruction to produce a folder, a new folder is produced on a recording medium, and a result of image pickup is recorded under the thus produced folder. Consequently, it is possible to produce a folder simply and easily with an intention of the user reflected on production of the folder and manage files.

Furthermore, where a new folder is produced on a recording medium in response to turning on of the power supply and a result of image pickup is recorded under the produced folder, even if the user forgets to operate the folder switch, a folder can be produced in response to a delimiter in image pickup, and the convenience in use to the user in file management can be enhanced as much.

Further, where the folder is changed over between moving pictures and still pictures to record a result of image pickup, moving pictures and still pictures are collected separately in different files to be managed, and consequently, the convenience in use in file management can be enhanced.

Further, as regards such folders of moving pictures and still pictures as described above, since a folder is produced below the folder in which moving pictures are collected in response to an operation of the folder switch to record a file of moving pictures and a folder is produced below the folder in which still pictures are collected in response to an operation of the folder switch to record a file of still pictures, moving pictures and still pictures can be managed separately to produce a folder on which an intention of the user is reflected for each of moving pictures and still pictures to record a result of image pickup.

### (4) Embodiment 2

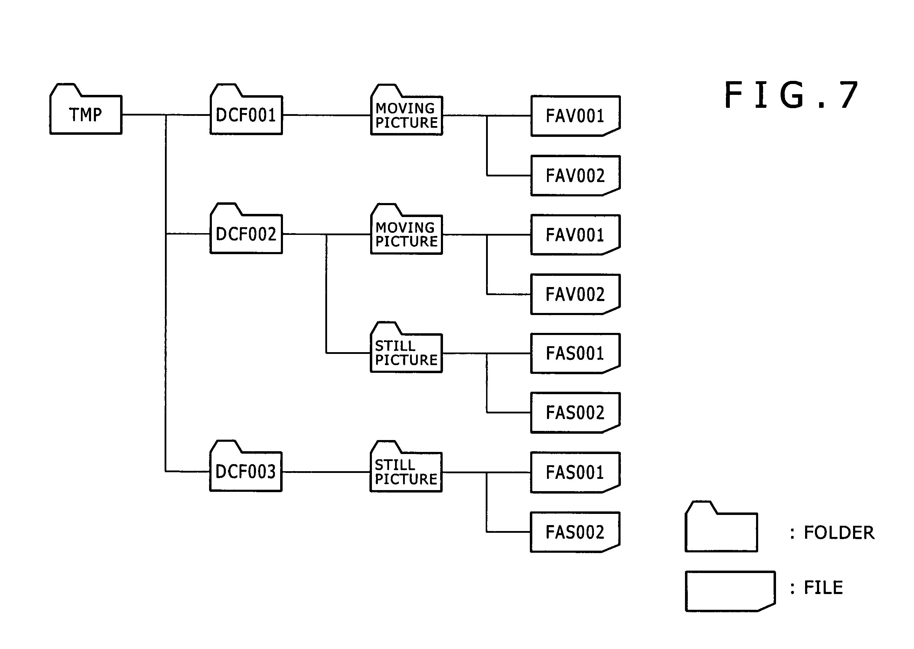

In this embodiment 2, in place of production of folders for each of the folder of moving pictures and the folder of still pictures described hereinabove with reference to FIG. 5, a folder of moving pictures and a folder of still pictures are formed corresponding to recording of results of image pickup below folders DCF001, DCF002 and DCF003 produced by a folder switch as shown in FIG. 7, and results of image pickup in the form of moving pictures and still pictures are recorded in the folder of moving pictures and the folder of still pictures, respectively. It is to be noted that the present embodiment is configured similarly to the embodiment 1 described hereinabove except that processes relating to the folders are different.

Where a new folder is produced on a recording medium in response to an operation of the folder switch which accepts an instruction to produce a folder and a result of image pickup is recorded under the thus produced folder and besides a folder or folders in which moving pictures or/and still pictures are collected are produced below the new folder and results of image pickup are recorded into the folder or folders as in the present embodiment, similar effects to those of the embodiment 1 can be obtained. Further, by management of folders based on the place of image pickup or the date, files of still pictures and moving pictures can be managed collectively.

### (5) Embodiment 3

In the present embodiment 3, the disk apparatus described hereinabove with reference to FIG. 2 records an index file on the optical disk 12 and manages various files recorded on the optical disk 12 through the index file. It is to be noted that, since the video disk apparatus according to the present embodiment is configured similarly to the video disk apparatus according to the embodiment 1 except that it is different in configuration relating to the index file, in the following description, the configuration of FIG. 2 is referred to suitably.

In the present embodiment, a result of image pickup is recorded in a Quick Time (hereinafter referred to as QT) file format on the optical disk 12. The QT format here is a file format created as an extension function of an OS (Operating System) for reproducing moving pictures and so forth without using special hardware. The QT format is a time-based multimedia file format which allows actual data of various forms such as moving pictures, sound, still pictures, characters, and MIDI to be reproduced in synchronism with each other on the same time base. The QT format is compatible also with streaming on a network.

Consequently, in the video disk apparatus 1, the DSP 6 outputs, upon recording, video data and audio data outputted from the video interface 4 and the audio interface 8 in the QT format to the medium interface 10 so that they are recorded on the optical disk 12. On the other hand, upon reproduction, the DSP 6 processes reproduction data of the QT format outputted from the medium interface 10 and outputs resulting data to the video interface 4 and the audio interface 8.

In a corresponding relationship to this, the MPU 3 acquires various kinds of information relating to such processes of the DSP 6 upon recording and reproduction and outputs the acquired information to the DSP 6. Further, as regards the QT files relating to results of image pickup, the MPU 3 records results of image pickup in the form of moving pictures and still pictures into the folder of moving pictures and the folder of still pictures provided on the optical disk 12, respectively. Further, at this time, the MPU 3 provides numerical values, which increase successively, for the files to set file names. Consequently, the video disk apparatus 1 merely records moving pictures and still pictures collectively into the individually corresponding folders on the optical disk 12.

The index file is a file in which information necessary for reproduction such as the address of the recording position, the file name and the file length is managed by the file management system of the optical disk 12 similarly to a file (hereinafter referred to as QT file) of the QT format recorded on the optical disk 12 in such a manner as described above. The index file includes information for introduction of the substance of QT files which are an object of management recorded on the optical disk 12 and other necessary information. Consequently, the video disk apparatus 1 selects one of the QT files recorded on the optical disk 12 through the index file and reproduces the selected file from the optical disk 12 based on the file management system. Therefore, even where a large number of QT files are recorded on the optical disk 12, a desired file can be selected rapidly and accurately, and the operability can be enhanced as much.

In the present embodiment, the index file is formed from a series of entries each in the form of a block of information (hereinafter referred to as extract information) extracted from information relating to the QT files and allocated to information which introduces the substance of the QT files and so forth. Consequently, the substance of each QT movie file can be grasped simply, easily and rapidly from the index file.

The index file is produced in a file structure same as that of the QT files recorded on the optical disk 12 and includes data of the extract information classified and grouped for each attribute. Consequently, the index file can be produced and processed making use of the configuration of the video disk apparatus 1 which produces QT files, and the video disk apparatus 1 can be simplified in configuration as much.

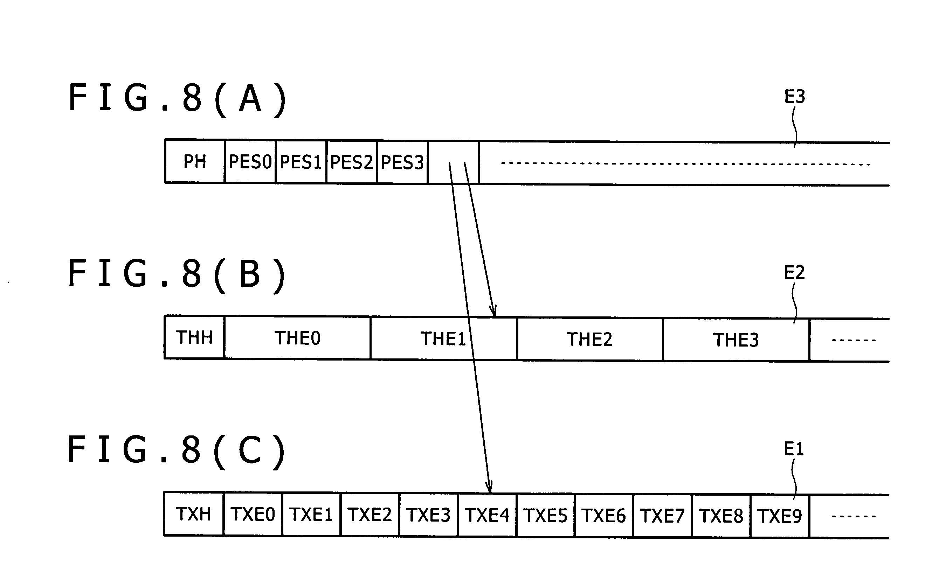

In particular, as shown in FIGS. 8 (A) to 8(C) in which the index file is shown corresponding to the configuration of a QT file, the index file is configured such that extract information according to actual data is grouped and allocated to a text entry file E1, a thumbnail image entry file E2 and a property entry file E3. Thus, the index file includes the entry files E1 to E3 and a resource file (not shown) including management information for the entry files E1 to E3.

Here, in the resource file, management information of the starting positions of slots and so forth of the entry files E1 to E3 is recorded together with attribute information and so forth of the index file.

In contrast, each of the entry files E1 to E3 is formed such that a header TXH, THH or PH indicative of an attribute or the like of the entry file E1 to E3 is provided at the top thereof and is followed successively by entries each in the form of a slot of a fixed length.

Here, the text entry file E1 is formed such that data representative of character strings of a disk title and titles relating to management object files and so forth is successively allocated to slots so that the text entry file E1 is formed from a series of entries of the data of the titles. In contrast, the thumbnail image entry file E2 is formed such that thumbnail images formed as still images representative of the substance of the disk title and the management object files are successively allocated to slots so that the thumbnail image entry file E2 is formed from a series of entries of the thumbnail images.

In the text entry file E1 and the thumbnail image entry file E2, each slot is formed with a fixed length, and consequently, one or a plurality of slots are allocated to one management object file in response to the data amount of corresponding extract information obtained from the management object file. Further, depending upon the type of the management object file, no entry may sometimes be provided because the type of the extract information is different.

In contrast, the property entry file E3 is formed such that data representative of the attribute of the disk title and the management object files is allocated thereto and extract information in the form of binary data set to the disk title and the management object files is successively allocated to slots together with management information of the entries so that the property entry file E3 is formed from a series of entries of the extract information. The property entry file E3 is formed of each slot with a fixed length in the similar manner as the text entry file E1 and the thumbnail image entry file E2 described above. Further, the property entry file E3 is provided without fail even if the types of the management object files are different. Furthermore, in the property entry file E3, the entries of the management object files are set so as to correspond to the entries provided in the text entry file E1 and the thumbnail image entry file E2.

Consequently, where no entry is provided in the text entry file E1 and the thumbnail image entry file E2, in the property entry file E3, corresponding extract information of one management object file is allocated to one or a plurality of slots in response to the data amount of the corresponding extract information. In contrast, for example, in the text entry file E1 and/or the thumbnail image entry file E2, where a plurality of entries are set to one management object file, at least a plurality of entries are provided for the management object file irrespective of whether the data amount of extract information is great or small. According to the index file, portions thereof for actual data are formed with a fixed length so that useless consumption of the recording medium can be reduced and the number of times of accessing to the recording medium can be reduced to decrease the processing time.

In the property entry file E3, to each entry, management information (information representative of association indicated by an arrow mark in FIGS. 8 (A) to 8 (C) which specifies a corresponding entry of a different entry file is set as management information of an entry indicative of a relationship to a different entry is set. Further, for an entry which includes a plurality of slots, management information relating to an extension slot which specifies successively appearing entries is set. Consequently, in the index file, management information representative of a relationship to a different entry set to the property entry file E3 is used to specify a plurality of slots in which extract information of one management object file is recorded. Further, in the property entry file E3, information for specifying a corresponding management object file is set, and consequently, a management object file of extract information recorded in the index file is specified by the information.

Further, in the property entry file E3, management information in the form of validity information representative of whether extract information registered in each entry is valid or invalid is set. Consequently, only by setting the validity information provided in the property entry, the index file sets corresponding entries of the property entry file E3 and the other entry files E1 and E2 collectively to invalid thereby to delete the registration of the management object file in the index file.

The index file allows registration not only of a file existing on the recording medium but also of an existing folder or a virtual folder by the file management system of the recording medium into each entry file, and in each property entry, a hierarchical structure of property entries in which such folders are registered can be defined. Consequently, the index file manages files recorded on the optical disk 12 in accordance with a folder structure by an existing hierarchical structure set to the optical disk 12 and further in accordance with a folder structure according to a virtual hierarchical structure set in the index file.

Consequently, the index file can provide thumbnail images to the user using the thumbnail image entry file E2 or provide titles and so forth of files to the user using the text entry file E1, accept selection of a file based on the thumbnail images and the titles, and detect the selected file depending upon the file name by the file management system from the description of the property entry. From this, the operability by the user can be enhanced.

Thus, in the video disk apparatus 1, the MPU 3 acquires and decodes video data and audio data in the form of compressed data from the DSP 6 and, with regard to the video data, produces a thumbnail image by thinning pixels and produces the thumbnail image entry file E2 from such thumbnail images. Further, the MPU 3 produces data of a title from the file information of each of the management object files held by the file management system of the optical disk 12 and based on a setting of the user and produces the text entry file E1 from the thus produced data. Further, in response to an operation of the user, the MPU 3 produces the property entry file E3 and produces the resource file in response to the entry files E1 to E3.

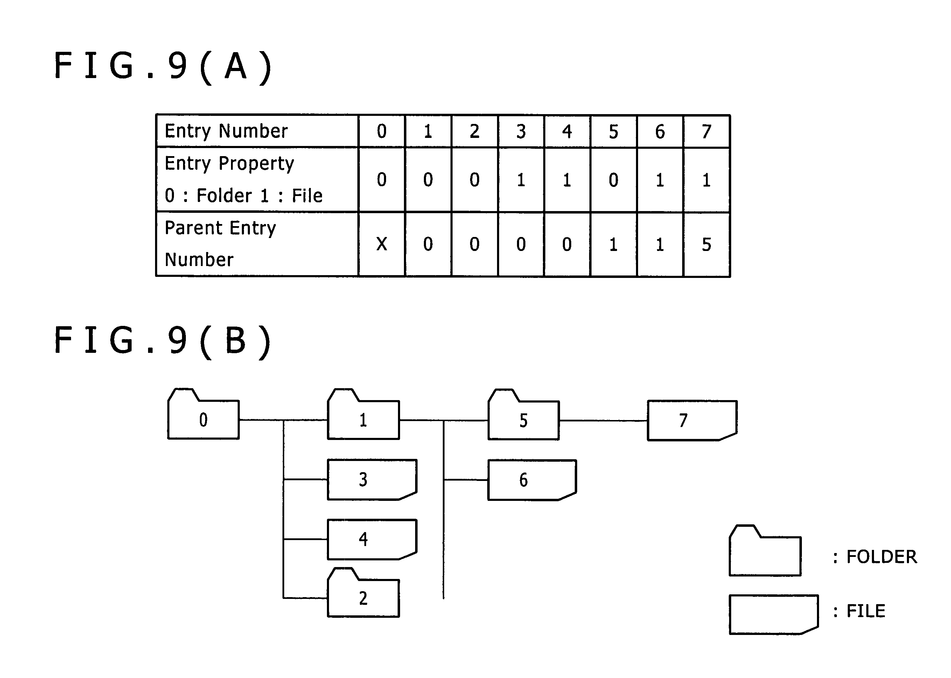

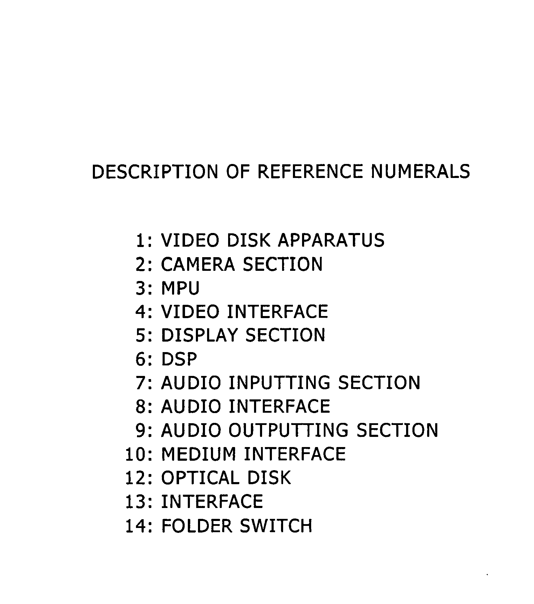

More particularly, the property entry file E3 has a hierarchical structure defined in accordance with such settings as illustrated in FIGS. 9(A) and 9(B). It is to be noted that, in the following description, only a case wherein an extension slot is not set is described for the simplified description, and each of folders and files is indicated by a slot number of a corresponding slot set therefore. Then, where an extension slot to a slot of a property entry exists or where a slot corresponding to another entry exists, a process for the slots of the property entry described below is executed for a lump of the relating slots.

In the property entry file E3, an entry number (Entry Number) for specifying each slot is set. Further, in the property entry file E3, an entry property flag (Entry Property) in the form of a set of a plurality of flags is set. In the entry property flag (Entry Property) here, various kinds of information each representative of an attribute of an entry are set, and as one of the flags, an entry property flag is set for identification of whether the slot corresponds to a folder (0: Folder) or corresponds to a file (1: File).

Consequently, in the example of FIGS. 9(A) and 9(B), a property entry of the entry number 0 is allocated to the existing root folder 0 by the file management system of the optical disk 12, and the entry property flag is set to the value 0 so that it can be discriminated that the property entry is an entry of a folder. Further, to the folders 1 and 2 and the files 3 and 4 in the immediately lower hierarchy relative to the root folder, property entries of the entry numbers 1, 2, 3 and 4 are allocated, respectively, and the entry property flags are set to the value 0 and the value 1 so that it can be discriminated that the property entries are folders and files, respectively. Further, to the folder 5 and the file 6 in the immediately lower hierarchy relative to the folder 1, property entries of the entry numbers 5 and 6 are allocated, and the entry property flags are set to the value 0 and the value 1 so that it can be discriminated that the property entries are a folder and a file, respectively. Further, to the file 7 which belongs to the folder 5, a property entry of the entry number 7 is allocated, and the entry property flag is set to the value 1 so that it can be discriminated that the property entry is a file.

To each of the thus set entries corresponding to the folders and the files, a parent entry number (Parent Entry Number) indicative of a slot corresponding to the nearest folder to which the corresponding file or folder belongs is allocated to the property entry file E3 as management information representative of a relationship of the entry to another entry. Consequently, in the example shown in FIGS. 9 (A) and 9(B), for the entries of the entry numbers 1 to 4, the parent entry number (Parent Entry Number) is set to the value 0 so as to indicate that the folders 1 and 2 and the files 3 and 4 of the entry numbers 1 to 4 belong to the root folder. Meanwhile, for the entries of the entry numbers 5 and 6, the parent entry number (Parent Entry Number) is set to the value 1, and for the entry of the entry number 7, the parent entry number (Parent Entry Number) is set to the value 5. Consequently, it is indicated that the corresponding folder 5, file 6 and file 7 belong to the folder 1, folder 1 and folder 5, respectively.

Further, conversely to an indication of an entry by a parent entry number, also a child entry number indicating the lower side from the higher side is registered additionally so that a file or the like which belongs to a particular folder can be searched out simply and easily from the child entry number. In this instance, for the entry of the entry number 0, the entry numbers 1, 2, 3 and 4 indicative of the entries of the folders 1 and 2 and the files 3 and 4 are registered as child entry numbers. Further, for the entry number 1, the entry numbers 5 and 6 indicative of the entries of the folder 5 and the file 6 are registered as child entry numbers, and for the entry number 5, the child entry number of the entry number 7 is registered.

Thus, in the index file, the files can be managed in accordance with a hierarchical structure which actually exists in the file management system and further with a virtual hierarchical structure. It is to be noted that, in the following description, information indicative of another entry according to such a definition of a hierarchical structure as described above is referred to as hierarchical information.

The MPU 3 builds up the hierarchical structure described hereinabove with reference to FIG. 5 or 7 in response to turning on of the power supply or an operation of the folder switch 14 based on a virtual hierarchical structure by such settings of entries in the property entry file E3 as described above.

In particular, the MPU 3 registers a temporary entry into the index file by setting the hierarchical information so that the entry may belong to the root folder. Further, in the example of FIG. 5, the hierarchical information of an entry of a folder of moving pictures or still pictures is set so that the entry belongs to a virtual folder of the temporary entry when the entry is registered into the index file. Consequently, the index file for management of a result of image pickup is produced and recorded on and retained by the optical disk 12.

Further, the MPU 3 accesses the optical disk 12 through the medium interface 10 in response to turning on of the power supply or in response to loading of the optical disk 12 to reproduce the index file and stores various kinds of management information into the memory built therein. After the management information is stored into the memory in this manner, the MPU 3 detects an entry of a folder in which the latest result of image pickup is recorded from among results of image pickup recorded on the optical disk 12 and detects the folder name of the folder from the description of the text entry file of the entry or from the registration of the entry. Further, the MPU 3 updates the detected folder name and registers an entry of a virtual folder of moving pictures or still pictures into the index file by setting the hierarchical information so that the folder of the updated folder name may belong to the virtual folder. Also, the MPU 3 registers an entry of files according to the result of an image pickup by setting the hierarchical information so that the files may belong to this folder.

Further, in recording of succeeding results of image pickup, files according to the results of image pickup are successively registered into the index file by setting the hierarchical information so that the files may belong to the virtual folder produced in this manner.

Further, if the folder switch 14 is operated by the user, then an entry of the folder is registered into the index file in a similar manner, and a file according to a result of image pickup is recorded into the index file by setting the hierarchical information so that the file may belong to the entry. It is to be noted that, when a hierarchical structure is constructed in accordance with the example of FIG. 7, the MPU 3 processes the index file by setting an entry so as to be compatible with the hierarchical structure shown in FIG. 7.

On the other hand, if an instruction to reproduce a file is issued by the user, then the MPU 3 displays a virtual hierarchical structure through an analysis of the index file and accepts selection of a file of a reproduction object by selection of the user in the hierarchical structure. Further, if the user issues a reproduction instruction without selecting any file, then the files recorded on the optical disk 12 are successively reproduced and provided to the user in an order reverse to the recording order depending upon the records of the index file.

According to the present embodiment, even where a new folder is produced on a recording medium in response to an operation of the folder switch by a process for the index file and a result of image pickup is recorded under the thus produced folder, it is possible to produce a folder simply and easily with an intention of the user reflected on the production of the folder and manage files. Further, since the management of files of results of image pickup in the index file is performed based on a virtual hierarchical structure different from an existing hierarchical structure set to the optical disk 12, while a hierarchical structure is defined on the optical disk 12 such that it has a high degree of compatibility with other recording and reproduction apparatus to record results of image pickup, the hierarchical structure can be defined suitably for an application of the video disk apparatus 1.

### (6) Other Embodiments

It is to be noted that, while, in the embodiments described hereinabove, the operation mode is changed over by means of the folder switch to the folder setting mode in which a folder is produced and a result of image pickup is recorded, the present invention is not limited to this, and the changeover of the operation mode by means of the folder switch may be omitted.

Further, while it is described in the description of the embodiment 3 that a folder is changed over in accordance with a virtual hierarchical structure in which the index file is used to record a result of image pickup, the present invention is not limited to this, but even where the index file is used, a folder may be produced in accordance with an existing hierarchical structure to record a result of image pickup.

Further, while it is described in the description of the embodiment 3 that the index file is produced in accordance with a so-called external reference form wherein a source file and a file in which extract information is collected are formed as separate files, the present invention is not limited to this but can be applied widely also to a case wherein the index file is produced in accordance with a so-called internal reference form wherein a source file and a file formed from extract information are collected into a single file. Furthermore, the present invention can be applied widely also to a case wherein the index file is formed in a format other than the QT file format.

Further, while it is described in the description of the embodiments that the present invention is applied to a video disk apparatus to record a result of image pickup, the present invention is not limited to this but can be applied widely to various apparatus which record a result of image pickup on a recording medium such as a portable telephone set and PDAs (Personal Digital Assistants) which have an image pickup function.

### Industrial Applicability

The present invention can be applied, for example, to a video disk apparatus.

## Claims

1. A file management apparatus which records a result of image pickup in a file, comprising:
an image pickup section for acquiring the result of image pickup;
a recording section for recording the result of image pickup on a recording medium; and
a control section for controlling operation of said image pickup section and said recording section,
wherein said control section produces, in response to an operation of a folder switch which accepts an instruction to produce a folder, a new folder on the recording medium and records the result of image pickup obtained from said image pickup section under the produced folder.

2. The file management apparatus according to claim 1, wherein said control section produces, in response to turning on of the power supply, a new folder on the recording medium and records the result of image pickup obtained from said image pickup section under the produced folder.

3. The file management apparatus according to claim 1, wherein said image pickup section performs changeover between moving pictures and still pictures to acquire the result of image pickup under the control of said control section, and said control section changes over the folder between the moving pictures and the still pictures to record the result of image pickup.

4. The file management apparatus according to claim 3, wherein the folder in which the moving pictures are to be recorded is a folder produced in response to an operation of said folder switch below a folder in which moving pictures are to be collected, and the folder in which the still pictures are to be recorded is a folder produced in response to an operation of said folder switch below a folder in which still pictures are to be collected.

5. The file management apparatus according to claim 3, wherein the folder in which the moving pictures are to be recorded is a folder in which moving pictures are to be collected and which is produced below a folder produced in response to an operation of said folder switch, and the folder in which the still pictures are to be recorded is a folder in which still pictures are to be collected and which is produced below a folder produced in response to an operation of said folder switch.

6. The file management apparatus according to claim 1, wherein files which are recorded on the recording medium are reproduced successively beginning with those files which are recorded under the latest folder.

7. The file management apparatus according to claim 1, wherein
said control section produces an index file from entries of extract information of the files recorded on the recording medium and records the index file on the recording medium,
a new folder in response to an operation of said folder switch is produced by registration of an entry of the new folder into the index file, and
the recording of the image pickup is recorded under the produced folder by registering, in coordination with an entry relating to the folder, an entry relating to a file based on the result of image pickup into the index file.

8. A file management method for recording a result of image pickup in a file on a recording medium, comprising the steps of:
producing a new folder on the recording medium in response to an operation of a folder switch which accepts an instruction to produce a folder; and
recording the result of image pickup under the produced folder.

9. A program of a file management method for causing a computer to execute a predetermined processing procedure to record a result of image pickup in a file on a recording medium, said processing procedure comprising the steps of:
producing a new folder on the recording medium in response to an operation of a folder switch which accepts an instruction to produce a folder; and
recording the result of image pickup under the produced folder.

10. A recording medium on which a program of a file management method for causing a computer to execute a predetermined processing procedure to record a result of image pickup in a file on a recording medium is recorded, said processing procedure comprising the steps of:
producing a new folder on the recording medium in response to an operation of a folder switch which accepts an instruction to produce a folder; and
recording the result of image pickup under the produced folder.
